Europäisches Patentamt

European Patent Office

Office européen des brevets

(19)

(11) Veröffentlichungsnummer: **0 204 980**

**A1**

## (12) EUROPÄISCHE PATENTANMELDUNG

(21) Anmeldenummer: **86106487.1**

(22) Anmeldetag: **13.05.86**

(51) Int. Cl.⁴: **G02B 6/34**

(30) Priorität: **03.06.85 DE 3519808**

(43) Veröffentlichungstag der Anmeldung:
**17.12.86 Patentblatt 86/51**

(84) Benannte Vertragsstaaten:
**DE FR GB**

(71) Anmelder: **Siemens Aktiengesellschaft Berlin und München**
**Wittelsbacherplatz 2**
**D-8000 München 2(DE)**

(72) Erfinder: **Mahlein, Hans F., Dr.**
**Queristrasse 2**
**D-8025 Unterhaching(DE)**
Erfinder: **Winzer, Gerhard, Dr.**
**Zugspitzstrasse 11**
**D-8011 Putzbrunn(DE)**

(54) Verfahren zum Herstellen von drei- oder mehrtorigen Lichtwellenleiterkopplern nach dem Strahlteilerprinzip.

(57) Es wird ein Verfahren zur Herstellung von Lichtwellenleiterkopplern nach dem Strahlteilerprinzip beschrieben, bei dem in einem Trägerkörper aus Glas eine sich verzweigende Lichtwellenleiterstruktur nach dem Ionenaustauschverfahren hergestellt wird. Diese Struktur wird in einem Verzweigungsknoten zusammen mit dem Trägerkörper durchtrennt. Auf eine der polierten Trennflächen der dabei entstandenen Trägerkörperteile wird eine teildurchlässige optische Schicht aufgebracht. Danach werden die beiden Trägerkörperteile wieder zusammengefügt, so daß wieder die ursprüngliche Lichtwellenleiterstruktur entsteht, die jetzt aber durch die optische Schicht geteilt ist. Das Verfahren zeichnet sich durch seine Einfachheit aus und ist insbesondere zur Herstellung von drei-oder mehrtorigen Wellenlängen-Multi/Demultiplexern nach dem Strahlteilerprinzip geeignet.

FIG 5

## Verfahren zur Herstellung von drei-oder mehrtorigen Lichtwellenleiterkopplern nach dem Strahlteilerprinzip

Die vorliegende Erfindung betrifft ein Verfahren zur Herstellung von drei-oder mehrtorigen Lichtwellenleiterkopplern nach dem Strahlteilerprinzip nach dem Oberbegriff des Patentanspruchs 1.

Ein Verfahren der genannten Art ist aus der DE-OS 28 51 679 (VPA 78 P 7195 DE) bekannt. Bei diesem Verfahren wird eine trägerkörpergestützte, sich verzweigende Lichtwellenleiterstruktur so hergestellt, daß in der Oberfläche eines Trägerkörpers zunächst eine sich verzweigende Führungskanalstruktur mit einem durchgehenden Führungskanal erzeugt wird, von dem Führungskanäle abzweigen. In den durchgehenden Führungskanal wird ein durchgehender Glasfaser-Lichtwellenleiter eingelegt und in die abzweigenden Führungskanäle werden ebenfalls Glasfaser-Lichtwellenleiter eingelegt, die seitlich an den durchgehenden Lichtwellenleiter stoßen. Darüber hinaus müssen zur Durchführung des Durchtrennungsschrittes, des Beschichtungsschrittes und Zusammenfügungsschrittes die in die Führungskanäle eingelegten Lichtwellenleiter bleibend fixiert werden. Dazu wird die sich verzweigende Lichtwellenleiterstruktur mit einem Deckkörper abgedeckt, der mit dem Trägerkörper fest verbunden wird.

Die Herstellung der sich verzweigenden Führungskanalstruktur erfolgt so, daß die Oberfläche des Trägerkörpers mit einer Maske mit einer der Führungskanalstruktur entsprechenden Aussparung abgedeckt und danach die Struktur in den Trägerkörper geätzt wird.

Aufgabe der vorliegenden Erfindung ist es, aufzuzeigen, wie mit einem Verfahren der genannten Art die Lichtwellenleiterkoppler einfacher hergestellt werden können.

Diese Aufgabe wird gemäß dem kennzeichnenden Teil des Patentanspruchs 1 dadurch gelöst, daß der Durchtrennungsschritt an einer sich verzweigenden und durch ein Ionenaustauschverfahren hergestellten Lichtwellenleiterstruktur in einem Trägerkörper aus Glas längs einer durch zwei Marken auf der Oberfläche des Trägerkörpers genau definierten und einen Verzweigungsknoten der Lichtwellenleiterstruktur oder einen nahe bei diesem liegenden Punkt überschneidenden Durchtrennungslinie vorgenommen wird.

Es sei an dieser Stelle darauf hingewiesen, daß die Herstellung von sich verzweigenden und durch ein Ionenaustauschverfahren hergestellten Lichtwellenleiterstrukturen in einem Trägerkörper aus Glas bereits von Eiji Okuda, Ichiro Tanaka und Tetsuya Yamasaki in Appl. Optics, Vol. 23, No. 11, 1. Juni 1984, S. 1745-1748 beschrieben worden ist.

Danach kann die ganze Lichtwellenleiterstruktur mit im wesentlichen nur drei Verfahrensschritten hergestellt werden: einem Maskierungsschritt, einem ersten Ionenaustauschschritt zur Einbringung einer ersten Ionensorte und in einem nachfolgenden zweiten Ionenaustauschschritt zur Einbringung einer zweiten Ionensorte in den Trägerkörper. Daran können sich unmittelbar der Durchtrennungsschritt, der Beschichtungsschritt und der Zusammenfügungsschritt anschließen. Danach können mit dem erfindungsgemäßen Verfahren drei-oder mehrtorige Lichtwellenleiterkoppler nach dem Strahlteilerprinzip mit im wesentlichen nur sechs Verfahrensschritten hergestellt werden.

Wichtig bei der durch ein Ionenaustauschverfahren hergestellten Lichtwellenleiterstruktur ist der Punkt im oder nahe beim Verzweigungsknoten der Struktur, in dem die Struktur zu durchtrennen ist. Dieser Punkt ist so zu wählen, daß die Verluste des fertiggestellten Koppelelementes möglichst gering sind. Die Markierung eines aufgefundenen optimalen derartigen Punktes wird erfindungsgemäß durch zwei Marken auf der Oberfläche des Trägerkörpers eine diesen optimalen Punkt überschneidende Durchtrennungslinie genau definiert, längs der die Durchtrennung vorzunehmen ist.

Es sei in diesem Zusammenhang darauf hingewiesen, daß bereits in der DE-OS 32 30 570 (VPA 82 P 1671 DE) Marken auf der Oberfläche des Trägerkörpers vorgesehen sind, jedoch dienen dort diese Marken nicht zur Definition einer genau definierten Durchtrennungslinie, sondern als Poliermarken, bis zu denen nach der Durchtrennung die entstandenen Trennflächen abzupolieren sind.

Zweckmäßigerweise wird bei dem erfindungsgemäßen Verfahren nach Anspruch 2 so vorgegangen, daß die Lichtwellenleiterstruktur mittels einer auf die Oberfläche des Trägerkörpers aufgebracht, gegen Ionendiffusion wirkenden und eine der Lichtwellenleiterstruktur entsprechende Aussparung aufweisende Maske hergestellt wird, auf oder in der die Durchtrennungslinie definierenden Marken angeordnet oder markiert sind.

Günstig ist es, wenn gemäß Anspruch 3 die Marken als fluchtende streifenförmige Aussparungen in der Maske ausgebildet sind und der Durchtrennungsschritt bei zumindest in der näheren Umgebung der streifenförmigen Aussparungen auf der Oberfläche des Trägerkörpers belassener Maske vorgenommen wird, oder wenn gemäß Anspruch 4 die Marken durch zwei fluchtende streifenförmige Abdeckungen der Maske markiert sind, unter denen nach Ablösung der Maske vor der Ausführung des Durchtrennungsschrittes das Maskenmaterial in Form fluchtender Streifen stehenbleibt, welche dann die Marken bilden.

Ein vorteilhaftes Verfahren zur Herstellung eines dreitorigen Wellenlängen-Multi/Demultiplexers nach dem Strahlteilerprinzip, bei dem die teildurchlässige optische Schicht aus einer frequenzselektiven Filterschicht besteht, geht aus dem Anspruch 5 hervor und zweckmäßige Ausgestaltungen dieses Verfahrens sind in den Ansprüchen 6 bis 9 angegeben.

Ein vorteilhaftes Verfahren zur Herstellung eines fünftorigen Wellenlängen-Multi/Demultiplexers nach dem Strahlteilerprinzip, bei dem die teildurchlässige optische Schicht ebenfalls aus einer frequenzselektiven Filterschicht besteht, geht aus dem Anspruch 10 hervor und bevorzugte und zweckmäßige Ausgestaltungen dieses Verfahrens sind in den Ansprüchen 11 und 12 angegeben.

Bei den verwendeten gekrümmten Lichtwellenleitern ist darauf zu achten, daß in den Krümmungen keine allzu großen Lichtverluste auftreten. Deshalb werden zweckmäßigerweise gemäß Anspruch 13 der oder die Krümmungsradien der gekrümmten Lichtwellenleiter in Millimetergröße gewählt.

Die Erfindung wird anhand der Figuren in der folgenden Beschreibung näher erläutert. Von den Figuren zeigen:

Figur 1 in perspektivischer Darstellung einen Trägerkörper, dessen Oberfläche mit einer Maske zur Herstellung einer einfach sich verzweigenden Lichtwellenleiterstruktur zur Herstellung eines dreitorigen Multi/Demultiplexers abgedeckt ist, die zwei streifenförmige Aussparungen zur Definition der Durchtrennungslinie aufweist,

Figur 2 den Trägerkörper nach Figur 1 nach Herstellung der Lichtwellenleiterstruktur, von dem die Maske bis auf die Umgebung der streifenförmigen Ausparungen entfernt worden ist,

Figur 3 die nach der Durchtrennung längs der Durchtrennungslinie in Figur 1 bzw. Figur 2 entstandenen beiden Trägerkörperteile,

Figur 4 die beiden Trägerkörperteile nach Figur 3, wobei auf die Trennfläche des einen Trägerkörperteiles die optische Schicht aufgebracht ist,

Figur 5 den fertigen Multi/Demultiplexer nach der Zusammenfügung der beiden Trägerkörperteile nach Figur 4,

Figur 6 eine Draufsicht auf einen fertigen Multi/Demultiplexer wie er aus der Figur 5 hervorgeht, wobei aber der abzweigende Lichtwellenleiter nicht wie dort einfach, sondern zweifach gekrümmt ist, und

Figur 7 eine Draufsicht auf einen fertigen fünftorigen Multi/Demultiplexer, der funktionell dem aus Figur 6 der DE-OS 32 30 570 (VPA 82 P 1671 DE) hervorgehenden fünftorigen Multi/Demultiplexer und wie dort in der Empfangseinrichtung eines faseroptischen Sensorsystems verwendet werden kann.

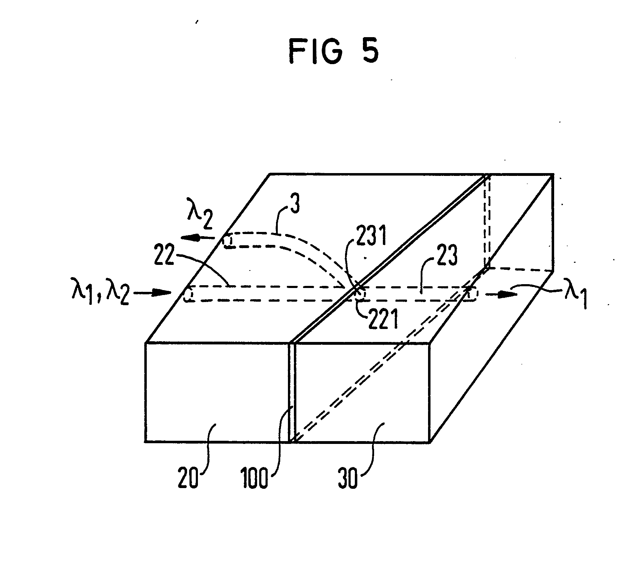

Bei der Herstellung des in der Figur 5 dargestellten dreitorigen Multi/Demultiplexers wird so vorgegangen, daß auf die Oberfläche eines quaderförmigen Trägerkörpers 10 aus Glas eine Schicht aus Metall, beispielsweise Titan, als Maske 9 aufgebracht wird, in welche die der zu erzeugenden Lichtwellenleiterstruktur entsprechende Aussparung 91 und die beiden streifenförmigen, die Durchtrennungslinie 80 definierenden Aussparungen 71 und 72 eingeätzt werden.

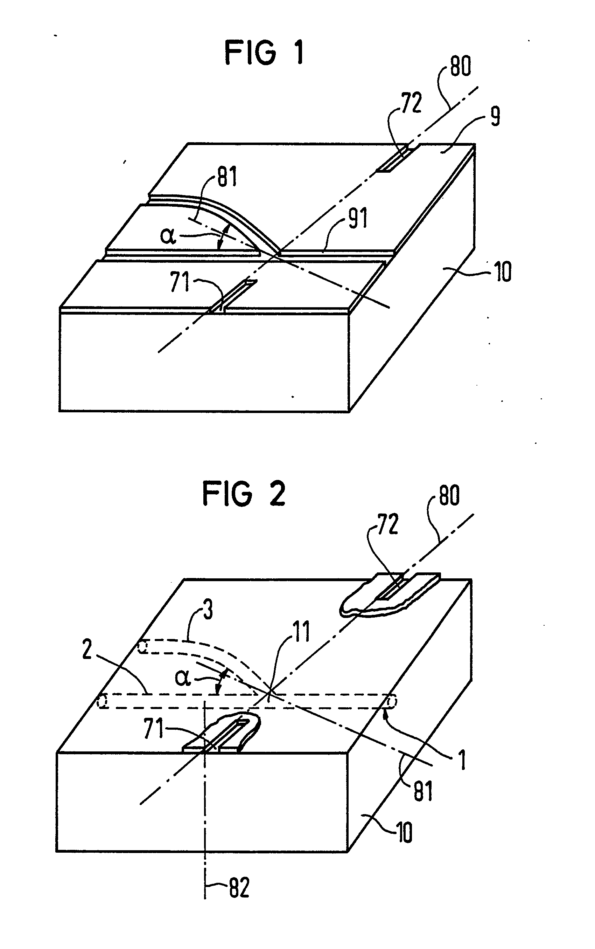

Die zu erzeugende Lichtwellenleiterstruktur geht aus Figur 2 hervor, ist dort mit 1 bezeichnet und besteht aus einem geradlinig verlaufenden Lichtwellenleiter 2 und dem davon abzweigenden, einfach gekrümmten Lichtwellenleiter 3. Der abzweigende Lichtwellenleiter 3 zweigt unter dem bestimmten Winkel α ab, der beispielsweise 40° betragen kann. Er verläuft vom Verzweigungsknoten 11 zunächst geradlinig und ist dann derart einfach gekrümmt, daß er am Ende zum geradlinig verlaufenden Lichtwellenleiter 2 etwa parallel ist. Die Durchtrennungslinie 80 ist so festgelegt, daß sie die Winkelhalbierende 81 des bestimmten Winkels α senkrecht überschneidet.

Diese Lichtwellenleiterstruktur 1 wird in dem maskierten Trägerkörper nach Figur 1 nach dem aus der genannten Druckschrift hervorgehenden Ionenaustauschverfahren erzeugt.

Die erzeugte Lichtwellenleiterstruktur 1 wird zusammen mit dem Trägerkörper 10 längs der Durchtrennungslinie 80 in einer zur Winkelhalbierenden 81 senkrecht stehenden Ebene, die in der Figur 2 durch die Durchtrennungslinie 80 und die vertikale Linie 82 definiert ist, durchtrennt. Dabei kann die Maske 9 noch vollständig auf dem Trägerkörper 10 vorhanden sein oder, wie in der Figur 2 angedeutet, bis auf die nähere Umgebung der streifenförmigen Aussparungen 71 und 72 entfernt worden sein.

Die Durchtrennung wird vorzugsweise mit einer Säge vorgenommen und die Breite der streifenförmigen Aussparungen 71 und 72 wird zweckmäßigerweise entsprechend der Dicke der Säge oder eines anderen Schneidwerkzeugs gewählt.

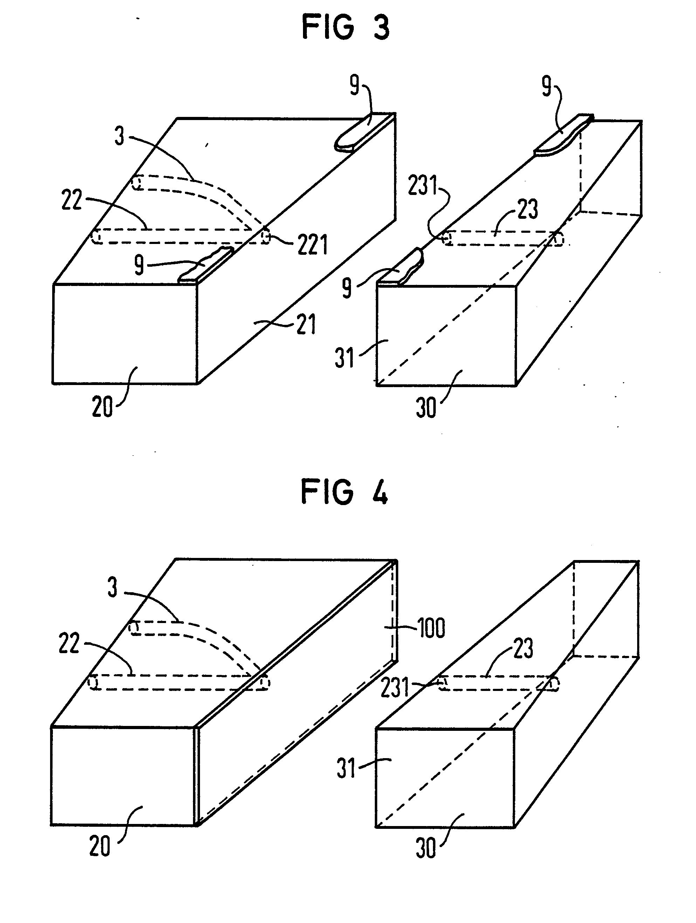

Die nach der Durchtrennung entstandenen Trägerkörperteile gehen aus der Figur 3 hervor und sind mit 20 bzw. 30 bezeichnet.

Die Durchtrennungslinie 80 ist so gelegt, daß sie den Verzweigungsknoten oder einen Punkt nahe bei diesem Verzweigungsknoten überschneidet. Der Verzweigungsknoten kann definiert werden als der Schnittpunkt der Achse des geradlinig verlaufenden Lichtwellenleiters 2 mit der Achse des abzweigenden Lichtwellenleiters 3.

Die nach der Durchtrennung entstandenen beiden Trägerkörperteile gehen aus der Figur 3 hervor und sind mit 20 bzw. 30 bezeichnet. Auf dem Trägerkörperteil 20 befindet sich der Teil der Lichtwellenleiterstruktur 1, der aus dem geradlinie verlaufenden Lichtwellenleiter 22 und dem abzweigenden Lichtwellenleiter 3 besteht. Die in der Trennfläche 21 dieses Trägerkörperteils 20 liegende Stirnfläche dieses Teils der Lichtwellenleiterstruktur 1 ist mit 221 bezeichnet. Auf dem anderen Trägerkörperteil 30 befindet sich nur der aus dem geradlinien Lichtwellenleiter 23 bestehende Teil der Lichtwellenleiterstruktur 1, dessen in der Stirnfläche 31 dieses Trägerkörperteils 30 liegende Stirnfläche mit 231 bezeichnet ist.

Die beiden geradlinig verlaufenden Lichtwellenleiter 22 und 23 ergeben zusammengesetzt wieder den ursprünglichen Lichtwellenleiter 2.

Die beiden Trennflächen 21 und 31 werden poliert, so daß plane Flächen mit optischer Qualität entstehen. Auf eine dieser polierten Trennflächen 21 bzw. 31, beispielsweise auf die Trennfläche 21, wird dann die frequenzselektive Filterschicht aufgebracht, beispielsweise durch Aufdampfen einer dielektrischen Vielfachschicht.

Die Figur 4 zeigt die Trägerkörperteile 20 und 30 nach Figur 3 mit der auf die Trennfläche 21 des Trägerkörperteils 20 aufgebrachten frequenzselektiven Filterschicht 100.

Die beiden Trägerkörperteile 20 und 30 nach Figur 4 werden so zusammengefügt und miteinander fixiert, daß die in den Trennflächen 21 bzw. 31 liegenden Stirnflächen 221 bzw. 231 der getrennten Teile 22 mit 3 und 23 der durchtrennten Lichtwellenleiterstruktur 1, zwischen denen sich die frequenzselektive Filterschicht 100 befindet, einander gegenüberliegen und die Form des ursprünglichen Trägerkörpers 10 im wesentlichen wieder hergestellt wird. Dadurch entsteht der aus der Figur 5 hervorgehende fertige dreitorige Multi/Demultiplexer, dessen frequenzselektive Filterschicht 100 beispielsweise so gewählt ist, daß sie für eine bestimmte Wellenlänge $\lambda_1$ durchlässig und für eine andere bestimmte Wellenlänge $\lambda_2$ undurchlässig ist.

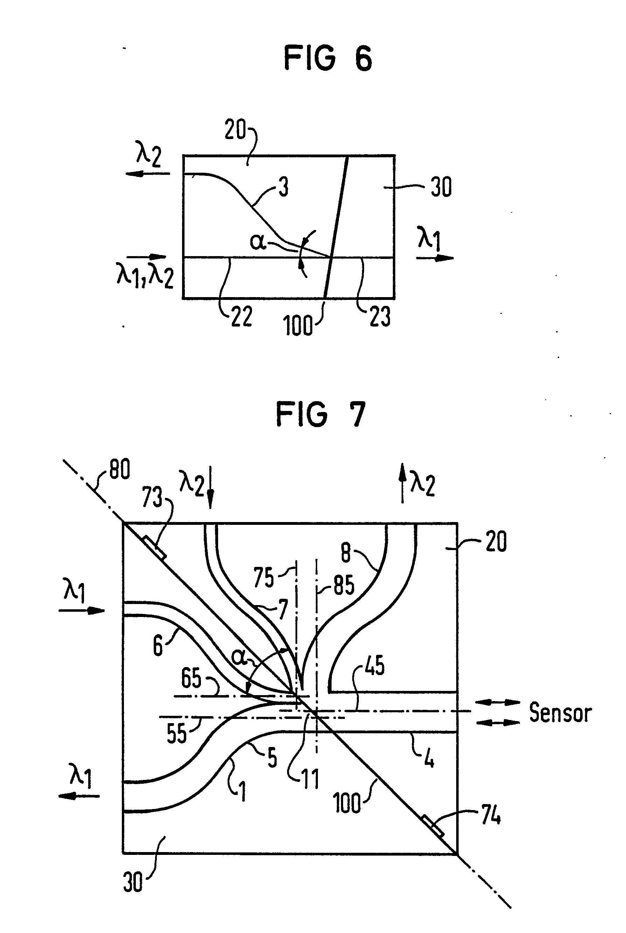

In der Figur 6 ist in Draufsicht ein dem Multi/Demultiplexer nach Figur 5 entsprechender Multi/Demultiplexer dargestellt, der sich von dem nach Figur 5 dadurch unterscheidet, daß der bestimmte Winkel $\alpha$ näher bei 0° als bei 45°, beispielsweise bei 15° liegt und daß der abzweigende Lichtwellenleiter zweifach gekrümmt ist, derart, daß er zunächst von dem geradlinig verlaufenden Lichtwellenleiter 22 fort gekrümmt und dann entgegengesetzt so gekrümmt ist, daß er am Ende zum geradlinig verlaufenden Lichtwellenleiter 22 parallel ist. Auch ist die frequenzselektive Filterschicht 100 bei dem Multi/Demultiplexer nach Figur 6 weniger stark zur Achse der Lichtwellenleiter 22, 23 geneigt als bei dem Multi/Demultiplexer nach Figur 5.

Die Figur 7 zeigt in Draufsicht einen fünftorigen Multi/Demultiplexer nach dem Strahlteilerprinzip, der ebenso wie der Multi/Demultiplexer nach Figur 6 nach dem im Zusammenhang mit den Figuren 1 bis 5 beschriebenen Verfahren hergestellt werden kann. Es ist dabei lediglich eine Maske zu verwenden, welche die der jetzigen Lichtwellenleiterstruktur mit den Lichtwellenleitern 4 bis 8 entsprechende Aussparung aufweist. Auch können als Marken zur Definition der Durchtrennungslinie 80 wieder streifenförmige Aussparungen verwendet werden. Bei dem Multi/Demultiplexer nach Figur 7 ist jedoch angenommen, daß die Marken durch streifenförmige Abdeckungen der Maske definiert sind. Nach Herstellung der Lichtwellenleiterstruktur 1 wird die Maske abgeätzt und unter den streifenförmigen Abdeckungen, die als Ätzmaske wirken, bleiben Streifen 73 und 74 aus dem Maskenmaterial übrig, die nunmehr die Durchtrennungslinie 80 definieren.

Bei der Lichtwellenleiterstruktur 1 nach Figur 7 verzweigt sich der Lichtwellenleiter 4 von dem Verzweigungsknoten 11 vierfach derart, daß davon zwei Paare zunächst achsparalleler und zweifach gekrümmter Lichtwellenleiter 5 und 6 bzw. 7 und 8 ausgehen. "Zunächst achsparallel" bedeutet, daß die Achsen der beiden Lichtwellenleiter eines Paares am Ausgangspunkt, d.h. im Verzweigungsknoten 11, mit den parallelen Achsen 55, 65 bzw. 75, 85 zusammenfallen.

Das Paar mit den Lichtwellenleitern 5 und 6 verläuft zunächst achsparallel zum einen Lichtwellenleiter 4, d.h. die Achsen 55 und 65 sind parallel zur Achse 45 des einen Lichtwellenleiters 4.

Das andere Paar mit den Lichtwellenleitern 7 und 8 zweigt von dem einen Lichtwellenleiter 4 unter dem bestimmten Winkel $\alpha$ = 90° ab, d.h. die Achsen 75 und 85 schneiden die Achse 45 des einen Lichtwellenleiters 4 bzw. die Achsen 65 und 55 senkrecht.

Jedes Paar Lichtwellenleiter besteht außerdem aus einem dickeren Lichtwellenleiter 5 bzw. 8 und aus einem dünneren Lichtwellenleiter 6 bzw. 7, wobei jeweils der dünnere Lichtwellenleiter 6 bzw. 7 dünner als der eine Lichtwellenleiter 4 ist.

Die Lichtwellenleiter jedes Paares sind zweifach gekrümmt, und zwar zunächst so, daß sie zuerst auseinanderlaufen und dann entgegengesetzt so, daß sie am Ende im Abstand voneinander angeordnet und etwa parallel zueinander sind. Die Durchtrennungslinie verläuft im Winkel von 45° zur Achse 45 des einen Lichtwellenleiters. Die Durchtrennung erfolgt senkrecht zur Zeichenebene und von dem dabei entstehenden Trägerkörperteilen entspricht der in der Figur 7 oberhalb der Durchtrennungslinie 80 liegende Teil dem Trägerkörperteil 20 in den Figuren 5 und 6 und der untere Teil dem Trägerkörperteil 30 in den Figuren 5 und 6. Dementsprechend sind in der Figur 7 die Trägerkörperteile bezeichnet.

Nach dem Beschichtungs-und Zusammenfügungsschritt entsteht der in Figur 7 dargestellte Multi/Demultiplexer, bei dem die für eine bestimmte Wellenlänge $\lambda_1$ durchlässige und eine andere bestimmte Wellenlänge $\lambda_2$ reflektierende, frequenzselektive Filterschicht 100 im Winkel von 45° zur Achse 45 des einen Lichtwellenleiters 4 geneigt ist. Zweckmäßigerweise wird die Lichtwellenleiterstruktur 1 nach Figur 7 so gewählt, daß die dünneren Lichtwellenleiter 6 und 7 der beiden Paare unmittelbar benachbart sind, so wie es aus der Figur 7 hervorgeht.

Die Durchmesser der Lichtwellenleiter 5 und 6 bzw. 7 und 8 jedes Paares werden zweckmäßigerweise so gewählt, daß ihre Summe gleich dem Durchmesser des einen Lichtwellenleiters 4 ist.

Bei allen gekrümmten Lichtwellenleitern ist darauf zu achten, daß die Krümmungsradien nicht zu klein sind, weil dadurch Lichtverluste auftreten. Durch Krümmungsradien in Millimetergröße, d.h. etwa von 1 mm bis 10 mm, lassen sich die Lichtverluste ausreichend vermeiden.

10 Trägerkörper
9 Maske
91 Aussparung
80 Durchtrennungslinie
71, 72 Aussparungen
1 Lichtwellenleiterstruktur
2 geradlinig verlaufender Lichtwellenleiter
3 abzweigender einfach gekrümmter Lichtwellenleiter
$\alpha$ Winkel
11 Verzweigungsknoten
81 Winkelhalbierende
82 vertikale Linie
20, 30 Trägerkörperteile
22 geradlinig verlaufender Lichtwellenleiter
21 Trennfläche
221 in der Trennfläche 21 liegende Stirnfläche der Lichtwellenleiterstruktur 1
23 geradlinig verlaufender Lichtwellenleiter
31 Stirnfläche des Trägerkörperteils
231 in der Stirnfläche 31 liegende Stirnfläche der Lichtwellenleiterstruktur 1
100 frequenzselektive Filterschicht
$\lambda_1$ Wellenlänge

$\lambda_2$ andere Wellenlänge
4 -8 Lichtwellenleiter
73, 74 Streifen
55, 65 parallele Achsen
75, 85 parallele Achsen
45 Achse des Lichtwellenleiters 4

**Ansprüche**

1. Verfahren zur Herstellung von drei-oder mehrtorigen Lichtwellenleiterkopplern nach dem Strahlteilerprinzip,

wobei eine trägerkörpergestützte, sich verzweigende und an einem Verzweigungsknoten (11; 90) durch eine teildurchlässige optische Schicht (100) quergeteilte Lichtwellenleiterstruktur (1) derart hergestellt wird,

-daß in einem Durchtrennungsschritt eine trägerkörpergestützte, sich verzweigende Lichtwellenleiterstruktur (1) in der Nähe eines Verzweigungsknotens (11) zusammen mit dem Trägerkörper (10) quer durchtrennt wird,

-daß in einem Beschichtungsschritt auf zumindest eine der beiden entstandenen und auf optische Qualität gebrachten Trennflächen (21, 31) auf den beiden getrennten Trägerkörperteilen (20, 30) die teildurchlässige optische Schicht (100) aufgebracht wird, und

-daß in einem Zusammenfügungsschritt die beiden Trägerkörperteile (20, 30) mit den einander zugekehrten Trennflächen (21, 31) so zusammengefügt und aneinander fixiert werden, daß die in den Trennflächen (21, 31) liegenden Stirnflächen (221, 231) der getrennten Teile (22 mit 3, 23) der durchtrennten Lichtwellenleiterstruktur (1) auf den beiden Trägerkörperteilen (20, 30), zwischen denen sich die teildurchlässige optische Schicht (100) befindet, einander gegenüberliegen und die Form des ursprünglichen Trägerkörpers (10) im wesentlichen wieder hergestellt wird,

**dadurch gekennzeichnet,**

-daß der Durchtrennungsschritt an einer sich verzweigenden und durch ein Ionenaustauschverfahren hergestellten stellten Lichtwellenleiterstruktur (1) in einem Trägerkörper (10) aus Glas längs einer durch zwei Marken (71, 72, 73, 74) auf der Oberfläche des Trägerkörpers (10) genau definierten und einen Verzweigungsknoten (11) der Lichtwellenleiterstruktur (1) oder einen nahe bei diesem liegenden Punkt überschneidenden Durchtrennungslinie (80) vorgenommen wird.

2. Verfahren nach Anspruch 1, **dadurch gekennzeichnet,**daß die Lichtwellenleiterstruktur (1) mittels einer auf die Oberfläche des Trägerkörpers (10) aufgebrachten, gegen Ionendiffusion wirkenden und eine der Lichtwellenleiterstruktur entsprechende Aussparung (91) aufweisende Maske (9) hergestellt wird, auf oder in der die die Durchtrennungslinie (80) definierenden Marken (71, 72; 73, 74) angeordnet oder markiert sind.

3. Verfahren nach Anspruch 2, **dadurch gekennzeichnet,** daß die Marken (71, 72) als fluchtende, streifenförmige Aussparungen in der Maske (9) ausgebildet sind, und daß der Durchtrennungsschritt bei zumindest in der näheren Umgebung der streifenförmigen Aussparungen auf der Oberfläche des Trägerkörpers belassener Maske (9) vorgenommen wird. (Figuren 1 bis 5)

4. Verfahren nach Anspruch 2, **dadurch gekennzeichnet,** daß die Marken (71, 72) durch zwei fluchtende streifenförmige Abdeckungen der Maske markiert sind, unter denen nach Ablösung der Maske vor der Ausführung des Durchtrennungsschritts das Maskenmaterial in Form fluchtender Streifen stehenbleibt, welche die Marken (73, 74) bilden. (Figur 7)

5. Verfahren nach einem der vorhergehenden Ansprüche, zur Herstellung eines dreitorigen Wellenlängen-Multi/Demultiplexers nach dem Strahlteilerprinzip, wobei die teildurchlässige optische Schicht aus einer frequenzselektiven Filterschicht besteht, **dadurch gekennzeichnet,** daß eine Lichtwellenleiterstruktur (1) verwendet wird, die einen geradlinig verlaufenden Lichtwellenleiter (2) und einen davon unter einem bestimmten Winkel (α) abzweigenden Lichtwellenleiter (3) aufweist, daß die Marken (71, 72) eine Durchtrennungslinie (80) definieren, welche die Winkelhalbierende (81) des bestimmten Winkels (α) senkrecht überschneidet, und daß beim Durchtrennungsschritt die Durchtrennung längs der Durchtrennungslinie (80) in einer zur Winkelhalbierenden (81) senkrecht stehenden Ebene vorgenommen wird.

6. Verfahren nach Anspruch 5, **dadurch gekennzeichnet,** daß eine Lichtwellenleiterstruktur (1) verwendet wird, bei welcher der abzweigende Lichtwellenleiter (3) zumindest einfach gekrümmt ist.

7. Verfahren nach Anspruch 6, **dadurch gekennzeichnet,** daß eine Lichtwellenleiterstruktur (1) verwendet wird, bei welcher der bestimmte Winkel (α) 45° beträgt oder näher bei 45° als bei 0° liegt, und bei welcher der abzweigende Lichtwellenleiter (3) derart einfach gekrümmt ist, daß er am Ende zum geradlinig verlaufenden Lichtwellenleiter (2) etwa parallel ist.

8. Verfahren nach Anspruch 6, **dadurch gekennzeichnet,** daß eine Lichtwellenleiterstruktur (1) verwendet wird, bei welcher der bestimmte Winkel (α) näher bei 0° als bei 45° liegt, und daß der abzweigende Lichtwellenleiter (3) zweifach gekrümmt ist, derart, daß er zunächst von dem geradlinig verlaufenden Lichtwellenleiter (2) fort gekrümmt und dann entgegengesetzt so gekrümmt ist, daß er am Ende zum geradlinig verlaufenden Lichtwellenleiter (2) etwa parallel ist.

9. Verfahren nach einem der Ansprüche 5 bis 8, **dadurch gekennzeichnet,** daß der abzweigende Lichtwellenleiter (3) vom Verzweigungsknoten (11) aus zunächst geradlinig verläuft.

10. Verfahren nach einem der Ansprüche 1 bis 4 zur Herstellung eines fünftorigen Wellenlängen-Multi/Demultiplexers nach dem Strahlteilerprinzip, wobei die teildurchlässige optische Schicht aus einer frequenzselektiven Filterschicht besteht, **dadurch gekennzeichnet,** daß eine Lichtwellenleiterstruktur (1) verwendet wird, bei der sich ein Lichtwellenleiter (4) von einem Verzweigungsknoten (11) vierfach derart verzweigt, daß von dem Verzweigungsknoten (11) zwei Paare zunächst achsparalleler und jeweils zweifach gekrümmter Lichtwellenleiter (5 mit 6, 7 mit 8) ausgehen, wobei ein Paar Lichtwellenleiter (5, 6) zunächst achsparallel zum einen Lichtwellenleiter (4) verläuft und das andere unter einem bestimmten Winkel (α) zur Achse (45) des einen Lichtwellenleiters (4) abzweigt, wobei jedes Paar Lichtwellenleiter (5 mit 6, 7 mit 8) aus einem dickeren Lichtwellenleiter (5 bzw. 8) und einem dünneren Lichtwellenleiter (6 bzw. 7) besteht, wobei jeweils der dünnere Lichtwellenleiter (6 bzw. 7) dünner als der eine Lichtwellenleiter (4) ist, und wobei die Lichtwellenleiter (5, 6 bzw. 7,8) jedes Paares zunächst so gekrümmt sind, daß sie auseinanderlaufen und dann entgegengesetzt so, daß sie am Ende im Abstand voneinander angeordnet und etwa parallel zueinander sind, und daß diese Lichtwellenleiterstruktur (1) in einer parallel zur Winkelhalbierenden des bestimmten Winkels - (α) verlaufenden Durchtrennungslinie (80) durchtrennt wird, die so gelegt ist, daß sich ein Paar Lichtwellenleiter (6, 7) ganz auf einem (20) der beiden entstehenden Trägerkörperteile (20, 30), und sich das andere (5, 6) ganz auf dem anderen Trägerkörperteil (30) befindet.

11. Verfahren nach Anspruch 10, **dadurch gekennzeichnet,** daß der Durchmesser des dickeren Lichtwellenleiters (5 bzw. 8) und der Durchmesser des dünneren Lichtwellenleiters (6 bzw. 7) eines Paares zusammen gleich dem Durchmesser des einen Lichtwellenleiters (4) gewählt sind.

12. Verfahren nach Anspruch 10 oder 11, **dadurch gekennzeichnet,** daß der bestimmte Winkel (α) gleich 90° gewählt ist.

13. Verfahren nach einem der vorhergehenden Ansprüche, **dadurch gekennzeichnet,** daß der oder die Krümmungsradien gekrümmter Lichtwellenleiter in Millimetergröße gewählt werden.

# FIG 1

# FIG 2

## FIG 3

## FIG 4

# FIG 5

# FIG 6

# FIG 7

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE-A-3 236 149 (SIEMENS AG.) * Seite 4, Zeilen 9-11; Seite 8, Zeile 11; Figuren 3,6 * | 1-8 | G 02 B 6/34 |
| | --- | | |
| A | EP-A-0 012 188 (SIEMENS AG.) * Seite 2, Zeilen 1,2; Seite 3, Zeilen 10-12; Seite 5, Zeile 25; Seite 8, Zeilen 12-30; Seite 9, Zeilen 10-19; Figuren 1,2 * | 1-8 | |
| | --- | | |
| A | FR-A-2 537 733 (NIPPON SHEET GLASS CO LTD.) * Insgesamt * | 1-8 | |
| | --- | | |
| A | US-A-4 240 849 (KUROKAWA et al.) * Insgesamt * | 1,2 | |
| | ----- | | |

RECHERCHIERTE SACHGEBIETE (Int. Cl.4)

G 02 B 6/34
G 02 B 6/28
G 02 B 26/02

Der vorliegende Recherchenbericht wurde für alle Patentansprüche erstellt.

| Recherchenort | Abschlußdatum der Recherche | Prüfer |
|---|---|---|
| DEN HAAG | 09-09-1986 | WESBY P.B. |